(19) Europäisches Patentamt
European Patent Office
Office européen des brevets

(11) **EP 2 278 339 B1**

(12) **EUROPÄISCHE PATENTSCHRIFT**

(45) Veröffentlichungstag und Bekanntmachung des Hinweises auf die Patenterteilung:
**23.11.2011 Patentblatt 2011/47**

(51) Int Cl.:
*G01P 13/04* (2006.01)   *H02P 6/00* (2006.01)
*H02P 6/18* (2006.01)   *H02P 7/00* (2006.01)

(21) Anmeldenummer: **10007014.3**

(22) Anmeldetag: **07.07.2010**

(54) **System mit einem einphasigen, elektronisch kommutierten Motor und elektronischer Recheneinheit**

System of a single phase, electronically commutated motor and an electronic computing unit

Système avec un moteur à commutation électronique monophasé et avec une unité de calcul electronique

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **11.07.2009 DE 102009033526**

(43) Veröffentlichungstag der Anmeldung:
**26.01.2011 Patentblatt 2011/04**

(73) Patentinhaber: **ebm-papst St. Georgen GmbH & Co. KG**
**78112 St. Georgen (DE)**

(72) Erfinder:
• **Weissbach, Henry**
**79777 Uhlingen-Birkendorf OT Brenden (DE)**
• **Löffler, Jens**
**78050 Villingen-Schwenningen (DE)**

(74) Vertreter: **Raible, Tobias**
**Raible & Raible**
**Schoderstrasse 10**
**70192 Stuttgart (DE)**

(56) Entgegenhaltungen:
**EP-A2- 1 596 495    WO-A1-2006/092265**
**JP-A- 7 222 477    US-A- 3 569 753**

**Beschreibung**

Einphasige elektronisch kommutierte Motoren (ECM) sind sehr preiswert und werden daher häufig für bestimmte Antriebsaufgaben verwendet, z.B. für Lüfter oder Kreiselpumpen. Sie werden gewöhnlich mittels eines Hallsensors gesteuert. Angestrebt wird jedoch eine Kommutierung ohne Sensor, bekannt unter dem Stichwort "sensorlos" oder "sensorless".

Die Terminologie bei solchen Motoren ist etwas verwirrend. Zur genauen Definition eines ECM gibt man zum einen die Zahl der Statorstromimpulse pro Rotordrehung von 360° el. an, z.B. einpulsig, zweipulsig, dreipulsig, etc., und zum anderen gibt man die Zahl der Wicklungsstränge im Stator an, z.B. einsträngig, zweisträngig, dreisträngig etc.

Man spricht also z.B. von einem einsträngigen, zweipulsigen ECM, oder von einem zweisträngigen, zweipulsigen ECM. Da in der physikalischen Wirkungsweise zwischen diesen beiden Motortypen kein Unterschied besteht, und da die Praxis stets nach Vereinfachung der Terminologie strebt, bezeichnet man solche Motoren generell als "einphasige ECMs", obwohl sie entweder nur einen Strang, oder aber zwei Stränge, haben können.

Da bei solchen Motoren der Rotor Drehstellungen hat, an denen der Motor kein elektromagnetisches Drehmoment erzeugen kann, verwendet man ein Hilfsmoment, das an diesen Nullstellen wirksam ist. Das kann ein magnetisch erzeugtes Hilfsmoment sein, das man als Reluktanzmoment bezeichnet. Alternativ könnte dieses Hilfsmoment mechanisch erzeugt werden, z.B. durch eine Feder, die in bestimmten Drehstellungen gespannt wird und an den Nullstellen ihre gespeicherte Energie abgibt. Die Funktion dieses Hilfsmoments ist es vor allem, den Rotor so zu drehen, dass er sich beim Start nicht in einer Drehstellung befindet, in der der Motor kein elektromagnetisches Drehmoment erzeugen kann, da sonst der Motor nicht starten könnte.

Solche Motoren haben eine bevorzugte Drehrichtung, in der sie leicht starten, und eine zur bevorzugten Drehrichtung entgegengesetzte Drehrichtung, in der der Start schwieriger, wenn auch nicht unmöglich, ist.

Eine zusätzliche Erschwernis ergibt sich bei Lüftern oder Pumpen dadurch, dass diese durch das transportierte Medium angetrieben werden können, z.B. durch starken Wind oder durch einen Sturm, wobei nicht bekannt ist, ob sich der Rotor durch diesen Fremdantrieb in der Vorzugsrichtung oder entgegen der Vorzugsrichtung dreht.

Bei einem Sturm kann die Drehzahl des Rotors ziemlich hoch werden, und bei einem Motor ohne Hallsensor muss man in diesem Fall zuerst die Drehrichtung ermitteln, und wenn diese falsch ist, muss man den Motor reversieren und - als Beispiel - von einer Drehzahl von -3.800 U/min auf eine Drehzahl von + 4.100 U/min umsteuern. Voraussetzung hierfür ist die Ermittlung der Drehrichtung.

Aus der EP 1 596 495 A2 ist es bekannt, bei einem solchen "einphasigen" ECM mit Reluktanz-Hilfsmoment die Drehrichtung aus der Form der induzierten Spannung zu ermitteln, also aus der Spannung, welche der permanentmagnetische Rotor bei seiner Drehung in einem stromlosen Wicklungsstrang induziert.

Aus der WO 2006/092265 A1 kennt man einen kollektorlosen Gleichstrommotor, der mit konstantem Strom betrieben wird. Dies ermöglicht es, während des Fließens des Konstantstroms die induzierte Spannung zu ermitteln. Mit Hilfe dieser ermittelten Spannung wird die Zeitdauer, während deren der Konstantstrom fließt, an die Drehzahl des Rotors angepasst.

Aus der JP 07-222477 A vom 18. August 1995 kennt man einen Gleichstrommotor, der in der Diagonalen einer H-Brücke angeordnet ist, um einen Betrieb in beiden Drehrichtungen zu ermöglichen. zum Bremsen wird dieser Motor durch die Halbleiterschalter der H-Brücke kurz geschlossen, und diese werden kurzzeitig geöffnet, um anhand der induzierten Spannung die Drehrichtung bestimmen zu können. Es handelt sich hier wohl um einen Gleichstrom-Kollektormotor, der als Motor und auch als Generator betrieben werden kann.

Die US 3 569 753 betrifft einen Synchronmotor mit einem achtpoligen permanentmagnetischen Rotor. Dieser Motor hat eine Antriebswicklung und eine separate Sensorwicklung mit zwei Strängen, die zueinander um 90 °el. versetzt sind. Sie dienen zur Erfassung der Drehrichtung. Das Signal des einen Strangs wird differenziert und zum nicht differenzierten Signal des anderen Strangs addiert. Die hierbei ermittelte Summe dieser Signale ist eine Funktion der Drehrichtung und ermöglicht es, bei Start in der falschen Richtung die Drehrichtung des Motors zu korrigieren.

Es ist daher eine Aufgabe der Erfindung, einen neuen einphasigen ECM bereitzustellen, also einen ECM, der entweder einsträngig oder zweisträngig sein kann.

Diese Aufgabe wird gelöst durch den Gegenstand des Patentanspruchs 1. Durch die Erfindung ist es möglich, bei einem ECM der eingangs genannten Art die Drehrichtung festzustellen, wodurch es möglich wird, einen solchen ECM auch dort zu verwenden, wo er durch einen Fremdantrieb in Drehung versetzt werden kann, da man nach Ermittlung der Drehrichtung etwaige Gegenmaßnahmen treffen kann, wenn zuvor festgestellt wurde, dass sich der Motor, gewöhnlich infolge Fremdantrieb, in der falschen Drehrichtung dreht.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:

Fig. 1    ein Übersichtsbild, welches schematisch verschiedene Situationen zeigt, die beim Betrieb eines sensorlosen einphasigen Motors auftreten können und die deshalb in seiner Software berücksichtigt werden müssen, um einen sicheren Anlauf zu gewährleisten,

Fig. 2 eine schematische Darstellung zur Erläuterung eines ECM, der mit einem Reluktanzmoment arbeitet,

Fig. 3 ein Schaltbild einer Ausführungsform eines einphasigen Motors, der zur Berücksichtigung von Situationen der Fig. 1 ausgebildet ist; der Motor ist als zweisträngiger Motor dargestellt,

Fig. 4 eine Darstellung zur Erläuterung der Fig. 3,

Fig. 5 eine Darstellung zur Erläuterung der Fig. 6 und 7,

Fig. 6 das Flussdiagramm eines ersten Teils einer Programmablaufs zur Bestimmung der Drehrichtung,

Fig. 7 das Flussdiagramm des zweiten Teils des Programmablaufs der Fig. 6,

Fig. 8 ein Schaltbild - analog Fig. 3 - eines einphasigen ECM, der in diesem Fall einsträngig ausgebildet ist, also nur einen einzigen Strang hat, welcher über eine H-Brücke angesteuert wird, und

Fig. 9 eine Darstellung zur Erläuterung der Fig. 8.

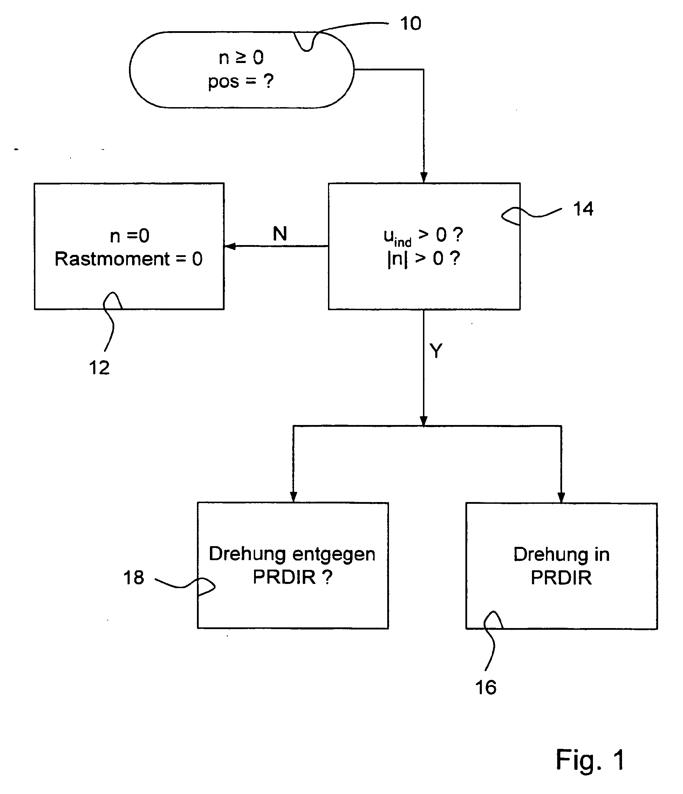

**Fig. 1** zeigt schematisch Probleme, die bei der Entwicklung eines "sensorlosen einphasigen ECM" berücksichtigt werden müssen.

Nach dem Einschalten befindet sich der Motor in der Situation 10 der Fig. 1, d.h. er hat entweder die Drehzahl n = 0, oder (bei Fremdantrieb) eine Drehzahl $n \neq 0$, und seine Drehstellung "pos" ist - für die Elektronik des Motors - unbekannt, da kein Drehstellungssensor vorhanden ist.

Im Schritt 14 wird gemessen, ob eine induzierte Spannung $u_{ind}$ vorhanden ist, also ob $u_{ind}$ größer als 0 ist. Dies kann z.B. auch der Fall sein, wenn ein Lüfter durch Wind angetrieben wird. Außerdem wird gemessen, ob der Betrag von n größer als 0 ist.

Falls die beiden Antworten Nein lauten, geht das Programm zum Schritt 12, wo angezeigt wird, dass die Drehzahl den Wert 0 hat, und dass auch das sogenannte Rastmoment (cogging torque) den Wert 0 hat, d.h. der Rotor ist in einer seiner Raststellungen eingerastet.

Falls im Schritt 14 die Antworten Ja sind, dreht sich der Rotor entweder in seiner Vorzugsrichtung PRDIR (Schritt 16), oder aber er dreht sich entgegen seiner Vorzugsrichtung PRDIR (Schritt 18). Man kann aber den aktuellen Daten die Drehrichtung nicht entnehmen.

Der Motor kann sich in diesem Fall in jeder der beiden Drehrichtungen drehen, wobei der normale Motorstrom fließt, aber sich der Motor in der falschen Richtung drehen kann. Eine falsche Drehrichtung bedeutet, dass diese nach dem Start reversiert werden muss.

Bei Fremdantrieb, z.B. durch Wind, muss nach dem Einschalten also als Erstes die Drehrichtung des rotierenden Rotors ermittelt werden.

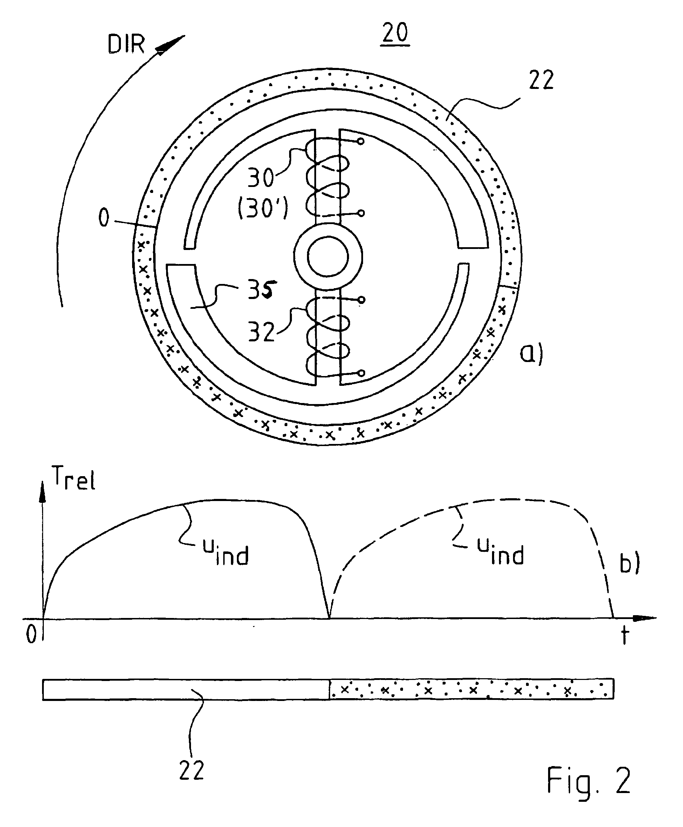

Die Fig. 2a) und 2b) zeigen in stark schematisierter Form und nur als Beispiel die Struktur eines Motors 20, der ein Reluktanz-Hilfsmoment verwendet. Dieser hat einen permanentmagnetischen Rotor 22, hier einen Außenrotor mit zwei Polen, und er hat einen Stator mit einer Statorwicklung 30 und einer Statorwicklung 32. Das Statorblechpaket ist mit 35 bezeichnet und hat in diesem Beispiel eine der für solche Motoren charakteristische Form, etwa vergleichbar zwei Sägezähnen.

Die Pollücken des Rotors 22, von denen eine mit 0 bezeichnet ist und die andere direkt gegenüber liegt, stellen sich bei stromlosem Stator etwa in die dargestellte Drehstellung, soweit kein Fremdantrieb vorliegt, d.h. die Pollücken suchen die Stelle größten Luftspalts. Wird der Rotor 22 von außen angetrieben, so erzeugt er in den Statorwicklungen 30, 32 eine induzierte Spannung $u_{ind}$, die bei der Bestromung (in der Drehrichtung DIR) gemessen und analysiert wird.

Die vorliegende Erfindung betrifft die Fälle 16 und 18, d.h. als Erstes muss bei Fremdantrieb die Drehrichtung des vom Wind (oder sonstigen Kräften) angetriebenen Motors ermittelt werden, damit dieser anschließend in der richtigen Drehrichtung betrieben werden kann.

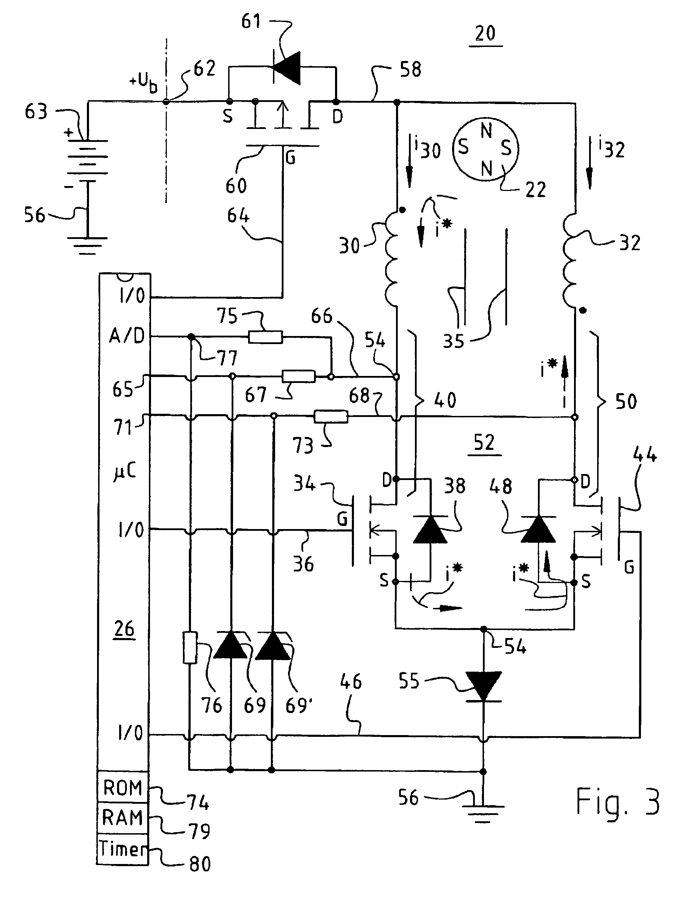

**Fig. 3** zeigt die Schaltung eines ECM 20, der sensorlos arbeitet. Der Motor 20 hat einen (nur schematisch angedeuteten) permanentmagnetischen Rotor 22, der vierpolig dargestellt ist, aber auch zwei, sechs, acht etc. Pole haben kann. Der Rotor 22 kann ein Innenrotor, Außenrotor, der Rotor eines Motors mit ebenem oder konischem Luftspalt etc. sein.

Der Motor 20 hat einen Mikrocontroller µC 26, Z.B. vom Typ PIC12F629 der Firma Microchip, USA. Die Stromversorgung des µC 26 ist wie üblich nicht dargestellt. Der Motor 20 hat zwei Statorwicklungsstränge 30, 32, die gewöhnlich über den magnetischen Kreis des Motors magnetisch gekoppelt sind, wie durch das Symbol 35 angedeutet. In Reihe mit dem ersten Wicklungsstrang 30 liegt ein erster Halbleiterschalter, hier z. B. ein n-Kanal MOSFET 34, zu dem eine Freilaufdiode 38 antiparallel geschaltet ist, und der von dem µC 26 über eine Steuerleitung 36 gesteuert wird. Der Strang 30 bildet zusammen mit dem Halbleiterschalter 34 und der Diode 38 eine erste Serienschaltung 40, die ggf. weitere Elemente enthalten kann.

In Reihe mit dem zweiten Strang 32 liegt ein zweiter steuerbarer Halbleiterschalter 44, der vom µC 26 über eine Steuerleitung 46 gesteuert wird. Das kann ebenfalls ein n-Kanal MOSFET sein, zu dem eine Freilaufdiode 48 antiparallel geschaltet ist. Zusammen mit dem zweiten Halbleiterschalter 44 bildet der zweite Strang 32 eine zweite Serienschaltung 50, die weitere Elemente enthalten kann.

Wie Fig. 3 zeigt, sind die beiden Serienschaltungen 40, 50 zu einer Parallelschaltung 52 parallel geschaltet, deren Fußpunkt 54 mit Masse 56 verbunden ist, ggf. über eine Diode 55. Auch sind die oberen Enden der Stränge 30, 32 mit einem Gleichstrom-Zwischenkreis (dc link) 58 verbunden. Wenn also der Halbleiterschalter 34 leitet, fließt ein Strom i30 vom Zwischenkreis 58 durch den ersten Strang 30, und wenn der Halbleiterschalter 44 leitet, fließt ein Strom i32 durch den Strang 32. Diese Aussage muss aber für die Zeitabschnitte kurz vor einer Kommutierung modifiziert werden, was nachfolgend erläutert wird.

Der Zwischenkreis 58 ist über einen dritten Halbleiterschalter 60, hier einen p-Kanal MOSFET, mit einem Motoranschluss 62 verbunden, an den im Betrieb eine positive Spannung Ub angelegt wird, z. B. 12, 24, 48, 60 V etc. gegen Masse 56. Eine Gleichstromquelle 63 beliebiger Art ist symbolisch dargestellt. Antiparallel zum dritten Halbleiterschalter 60 liegt eine Diode 61. Der dritte Halbleiterschalter 60 wird über eine Steuerleitung 64 vom μC 26 gesteuert.

Einem Komparatoreingang 65 des μC 26 wird über eine Sensorleitung 66 und einen Widerstand 67 ein Potential vom Drain D des Halbleiterschalters 34 zugeführt. Der Eingang 65 ist über eine Zenerdiode 69 mit Masse 56 verbunden, um diesen Eingang gegen Überspannung zu schützen.

Ebenso wird einem Komparatoreingang 71 des μC 26 über eine Sensorleitung 68 und einen Widerstand 73 ein Potenzial vom Drain des zweiten Halbleiterschalters 44 zugeführt. Der Eingang 71 ist über eine Zenerdiode 69' mit Masse 56 verbunden, um ihn gegen Überspannung zu schützen.

Ferner ist zwischen dem Drain D des ersten Halbleiterschalters 34 und Masse 56 ein Spannungsteiler aus zwei Widerständen 75, 76 angeschlossen, deren Verbindungspunkt 77 mit dem Eingang A/D eines AD-Wandlers im μC 26 verbunden ist.

**Messung von Ub**

Diese Messung erfolgt über den Spannungsteiler 75, 76. Dieser ist so dimensioniert, dass die interne Referenzspannung (hier 5 V) des AD-Wandlers im μC 26 nicht überschritten werden kann. Dadurch werden Messfehler ausgeschlossen. Dieser Spannungsteiler kann alternativ auch zwischen der Source S des dritten Halbleiterschalters 60 und Masse 56 angeschlossen werden.

Der Spannungsteiler 75, 76 hat auch eine andere Funktion: Je nach der Amplitude der Spannungen, die in den Strängen 30, 32 induziert werden, werden diese Spannungen durch die Schutzdioden 69, 69' begrenzt. Für die Drehrichtungserkennung ist es aber wichtig, die Form der induzierten Spannungen an den Eingängen 65 bzw. 71 zu erfassen, was durch eine Spannungsbegrenzung verhindert würde. Deshalb wird in diesem Fall die induzierte Spannung über den Spannungsteiler 75, 76 und den Eingang A/D des μC 27 erfasst, wodurch die tatsächliche Form der induzierten Spannung erfasst werden kann.

Die Signale an den Drains D des ersten Halbleiterschalters 34 und des zweiten Halbleiterschalters 44 werden an den Komparatoren 65, 71 im μC 26 erfasst.

**Wirkungsweise von Fig. 3**

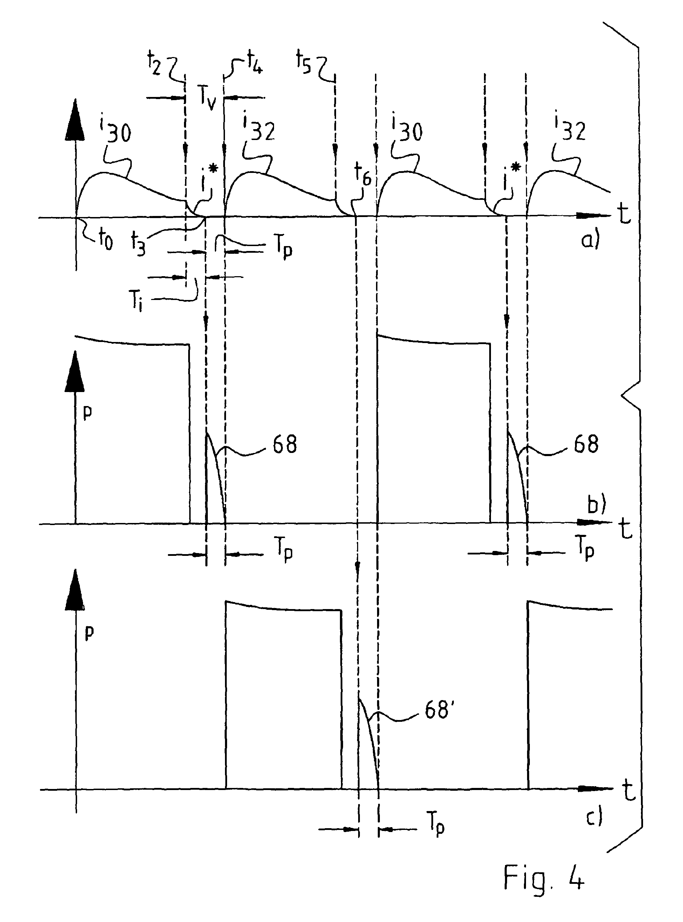

Hierzu wird auf Fig. 4 Bezug genommen.

Kurz vor dem Zeitpunkt t0 der **Fig. 4** sind in Fig. 3 alle drei Halbleiterschalter 34, 44, 60 gesperrt, und folglich erhält der Motor 20 keine Energie vom Anschluss 62, d. h. die Energiezufuhr aus der Gleichstromquelle 63 ist gesperrt.

Zum Zeitpunkt t0 werden die Transistoren 34, 60 durch den μC 26 eingeschaltet, so dass vom Anschluss 62 ein Strom i30 über den Transistor 60, den Zwischenkreis 58, den Strang 30, den Transistor 34 und die Diode 55 (falls vorhanden) nach Masse 56 fließt. Fig. 4a) zeigt die Form des Stromes i30, die naturgemäß von der Höhe der Motordrehzahl und anderen Faktoren abhängt.

Auf den Kommutierungszeitpunkt t0 folgt ein Kommutierungszeitpunkt t4, an dem der Transistor 34 ausgeschaltet ist und der Transistor 44 eingeschaltet wird, so dass der Strom i30 abgeschaltet und der Strom i32 (durch den Strang 32) eingeschaltet wird.

In einem zeitlichen Abstand Tv vor t4 liegt ein Zeitpunkt t2, an dem der Transistor 60 gesperrt wird, so dass die Energiezufuhr vom Anschluss 62 unterbrochen wird, d. h. dem Motor 20 wird während des Zeitraums Tv keine Energie aus der Gleichstromquelle 63 zugeführt.

Im Strang 30 fließt kurz vor dem Zeitpunkt t2 ein bestimmter Strom i, so dass im Strang 30 eine bestimmte Energie E gespeichert ist, gemäß der Formel

$$E = 0{,}5 * L * i^2 \qquad \ldots (1)$$

Hierbei ist

E = im Magnetfeld des betreffenden Stranges gespeicherte Energie
L = Induktivität dieses Strangs
i = Strom zum Zeitpunkt t2.

Diese gespeicherte Energie bewirkt, dass jetzt ein Kreisstrom i* durch den Strang 30 fließt, da der Transistor 34 weiter leitend ist, Dieser Kreisstrom i* fließt vom unteren Anschluss 54 des Strangs 30 über den Transistor 34, den Knotenpunkt 54, die Freilaufdiode 48 und die beiden Stränge 32 und 30, so dass er wie bisher ein antreibendes Drehmoment auf den Rotor 22 erzeugt, wodurch der Kreisstrom i* rasch sinkt und zum Zeitpunkt t3 der Fig. 4a) den Wert Null erreicht. Ab dem Zeitpunkt t3 kann also der Transistor 34 leistungslos gesperrt werden, da der Kreisstrom i* zu Null geworden ist.

Fig. 4 zeigt den zeitlichen Ablauf.

Zum Zeitpunkt t2 wird der Transistor 60 gesperrt, so dass ab diesem Zeitpunkt ein Kreisstrom i* fließt. Dieser wird zum Zeitpunkt t3 zu Null, so dass der Transistor 44 verlustlos gesperrt werden kann.

Während der Kreisstrom i* fließt, liegen die Drains D der Transistoren 34 und 44 im Wesentlichen auf Masse. Nach dem Ende des Kreisstroms i* entsteht am Drain D des nichtleitenden Transistors 44 ein Signal 68, das der induzierten Spannung im stromlosen Strang 32 entspricht. Dieses Signal 68 bewirkt zum Zeitpunkt t4 die Kommutierung, also das Einschalten der (bis dahin gesperrten) Transistoren 44 und 60 und das Sperren des Transistors 34, so dass durch den Strang 32 jetzt ein Strom i32 fließt.

Die beschriebenen Vorgänge wiederholen sich dann fortlaufend, wie das angesichts der Symmetrie der Schaltung evident ist, d. h. alternierend werden die Transistoren 34 und 44 leitend oder gesperrt, und es fließen entsprechende Kreisströme. Wenn der Transistor 34 leitend ist, fließt der Kreisstrom i* entgegen dem Uhrzeigersinn, und wenn der Transistor 44 leitend ist, fließt der Kreisstrom -i* (nicht dargestellt) im Uhrzeigersinn.

**Erfassung der Drehrichtung**

Zur Erfassung der Drehrichtung des Motors 20 wird der Motorstrom imot kurzzeitig abgeschaltet, um den Motor 20 z. B. während einer elektrischen Umdrehung stromlos zu machen. Hierbei induziert der rotierende Rotormagnet 22 eine Spannung in beiden Strängen 30 und 32.

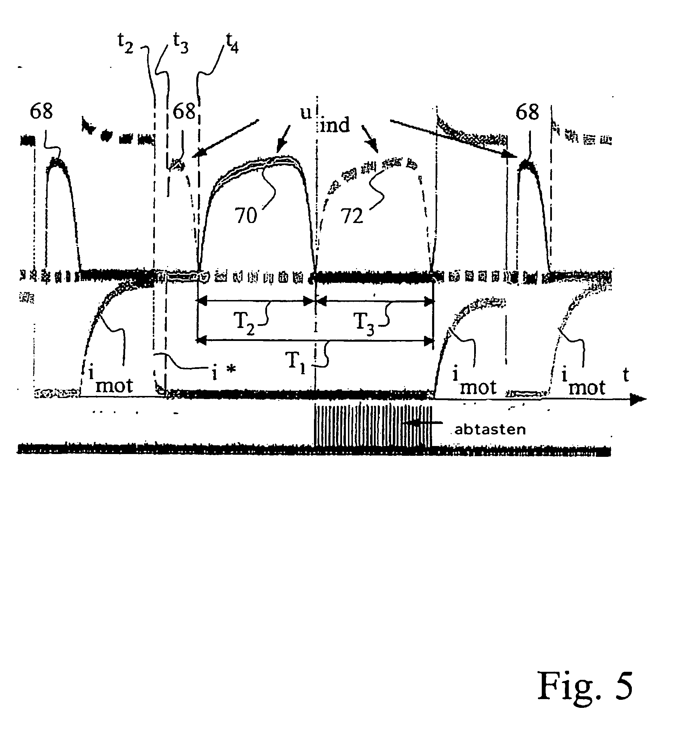

Dabei ergibt sich das Bild nach **Fig. 5**.

Zum Zeitpunkt t2 wird der Transistor 60 gesperrt, so dass der Motorstrom imot in einen Kreisstrom i* übergeht, der zum Zeitpunkt t3 zu Null wird, so dass ab t3 am Drain D des Transistors 44 die induzierte Spannung uind gemessen werden kann, durch die zum Zeitpunkt t4 der Transistor 34 gesperrt wird.

Beginnend ab dem Zeitpunkt t4 erhält man zwei Halbwellen 70, 72 der induzierten Spannung, welche dem µC 26 zugeführt werden. Am Ende der zweiten Halbwelle 72 wird der Strom imot wieder eingeschaltet.

Ein Timer 80 im µC 26 wird zum Zeitpunkt t4 eingeschaltet, um die kombinierte Zeitdauer T1 der beiden Halbwellen 70, 72 zu messen. Mit diesem Timer 80 wird außerdem die Zeitdauer T2 der ersten Halbwelle 70 gemessen, so dass die Zeitdauer T3 der zweiten Halbwelle 72 berechnet werden kann als

$$T3 = T1 - T2 \qquad \dots (2)$$

Bei kontinuierlicher, gleichmäßiger Drehung des Rotors 22 werden T2 und T3 annähernd gleich groß sein. Ist dies nicht der Fall, so ist die Drehung des Rotors 22 gestört worden, z. B. durch einen Windstoß, weshalb die Messung nicht verwendet werden kann und wiederholt werden muss.

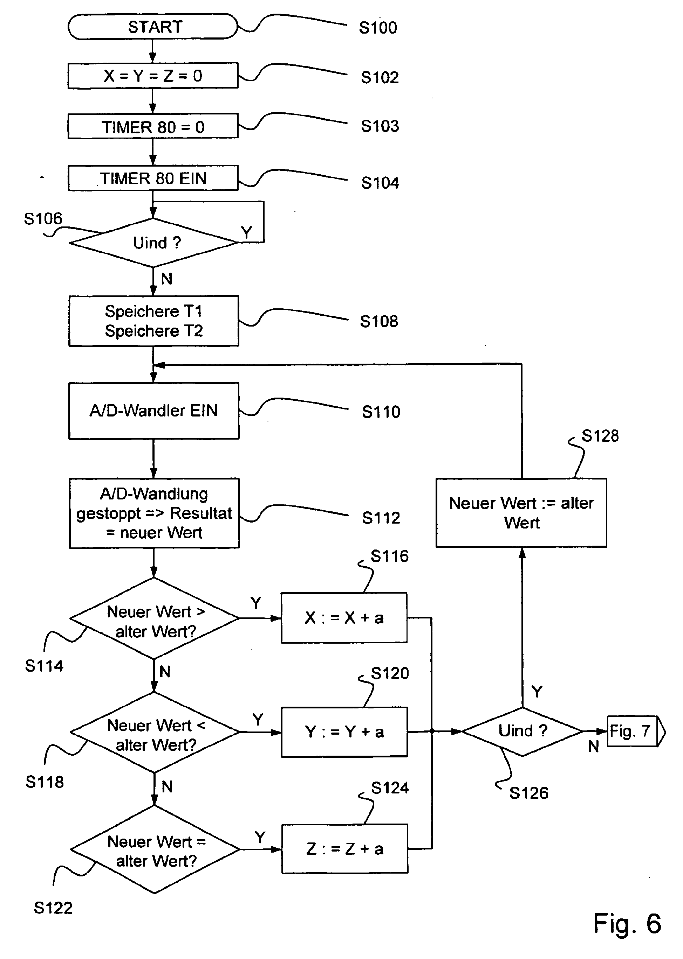

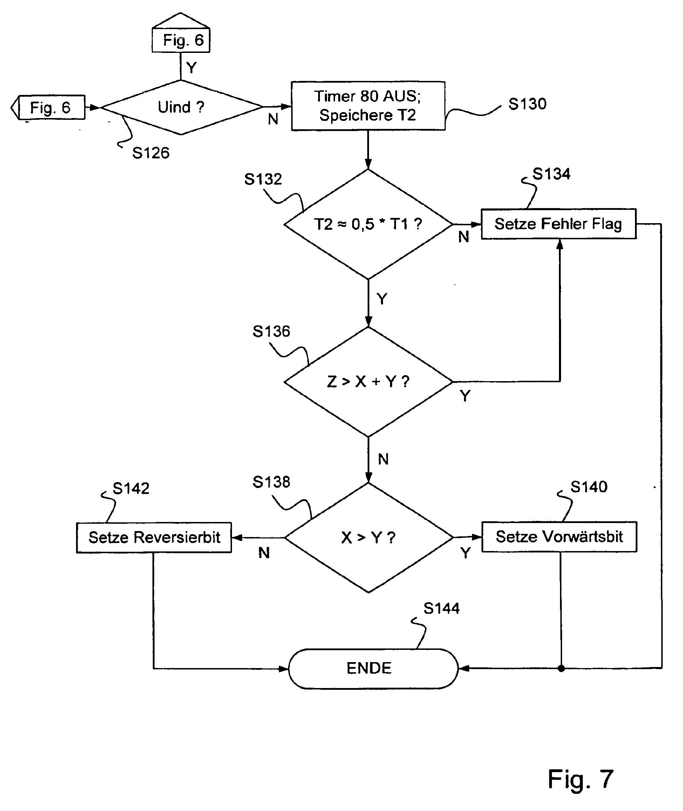

**Fig. 6** und Fig. 7 zeigen, wie die Drehrichtung ermittelt wird. Das Programm kann in einem ROM 74 oder einem RAM 79 gespeichert werden, z. B. im µC 26.

Nach dem Start bei S100 werden in einem Schritt S102 drei Speicher X, Y, Z auf Null gesetzt, ebenso bei S103 der Timer 80.

Danach wird bei S104 zum Zeitpunkt t4 der Timer 80 eingeschaltet.

In S106 wird geprüft, ob die induzierte Spannung uind einen von Null verschiedenen Wert hat. Falls Nein, wird bei S108 durch den Timer 80 die Messung der Zeitspannen T1 und T2 eingeleitet.

Anschließend wird bei S110 der AD-Wandler im µC 26 eingeschaltet, um einen Messwert zu digitalisieren.

Bei S112 ist die AD-Wandlung beendet, und man erhält einen neuen digitalen Wert, der gewöhnlich vom alten, also bisherigen Wert verschieden ist.

In S114 wird der neue Wert mit dem vorherigen "alten Wert" verglichen. Falls der neue Wert größer ist als der alte Wert, wird bei S116 eine Konstante a zum Speicher X addiert. Ist bei S118 der neue Wert kleiner als der alte Wert, so wird bei S120 die Konstante a zum Speicher Y addiert.

Falls bei S122 die Werte gleich groß sind, wird bei S124 der Wert a zum Speicher Z addiert.

Anschließend geht das Programm zum Schritt S126, wo geprüft wird, ob die induzierte Spannung uind von Null verschieden ist. Falls Ja, geht das Programm zum Schritt S128, wo der bisherige Wert ersetzt wird durch den neuen Wert aus S112, und anschließend wird in S110 ein neuer analoger Wert der induzierten Spannung digitalisiert.

**Fig. 7** zeigt die weitere Verarbeitung der Resultate aus Fig. 6.

Wenn in 5126 festgestellt wird, dass die induzierte Spannung uind auf Null gesunken ist, wird in S130 der Timer 80 abgeschaltet, und in 5132 wird geprüft, ob der Wert der Zeitdauer T2 etwa der Hälfte von T1 entspricht. Dieser Fall ist dann gegeben, wenn sich der Rotor 22 mit annähernd konstanter Geschwindigkeit dreht. Ist das nicht der Fall, so wird in S134 ein Fehlersignal "error flag" gesetzt.

Ist bei 5132 die Antwort Ja, so wird bei 5136 als erstes geprüft, ob der Wert im Speicher Z größer ist als die Summe der Werte in den Speichern X und Y. Dies bedeutet, dass sich in den meisten geprüften Fällen die induzierte Spannung uind nicht geändert hat. Das bedeutet einen Fehler, weshalb das Programm in diesem Fall zu 5134 geht, wo das Fehlersignal gesetzt wird.

Ist bei 5136 die Antwort Nein, so geht das Programm zu 5138, um festzustellen, ob der Wert im Speicher X größer ist als der im Speicher Y. Lautet dort die Antwort Ja, so läuft der Rotor 22 vorwärts, also in Vorzugsrichtung PRDIR, und in S140 wird das Vorwärtsbit gesetzt.

Lautet in S138 die Antwort Nein, so wird in S142 das Reversierbit gesetzt, was bedeutet, dass der Motor 20 reversiert werden muss. Anschließend geht das Programm zum Schritt S144, d. h. die Routine ist abgeschlossen.

Auf diese Weise kann z. B. während einer einzigen Umdrehung des Rotors 22 die Drehrichtung ermittelt werden, wobei der Motor 20 kurzzeitig stromlos ist.

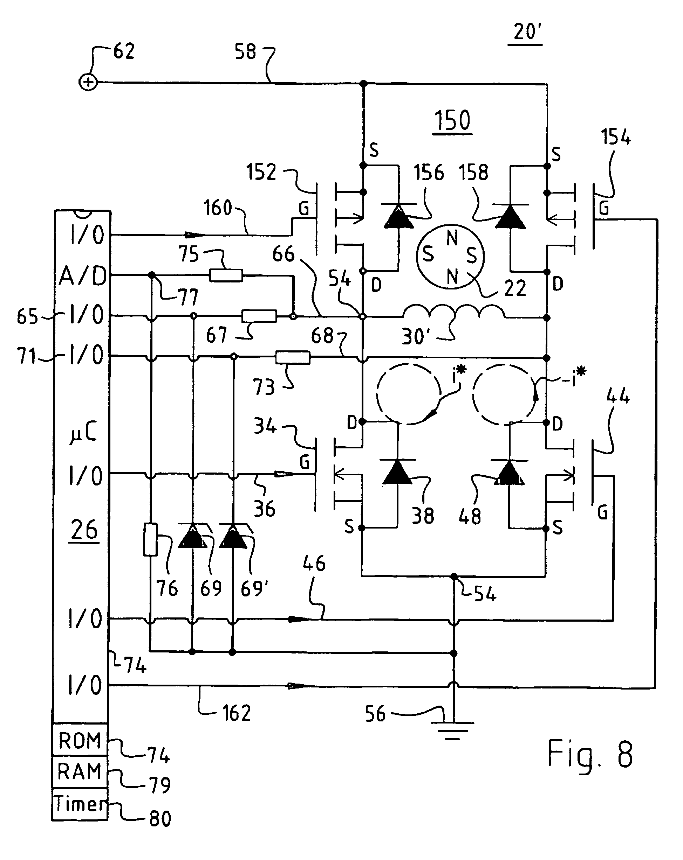

**Fig. 8** zeigt die Ausführung bei einem ECM, der als einsträngiger, zweipulsiger ECM 20' realisiert ist.

Der einzige Wicklungsstrang 30' ist zwischen den Drains D der beiden unteren n-Kanal-MOSFETs 34, 44 einer H-Brücke 150 angeordnet, deren obere Brückentransistoren 152, 154 als p-Kanal-MOSFETs ausgebildet sind, zu denen jeweils eine Freilaufdiode 156 bzw. 158 antiparallel geschaltet ist. Der Drain D des Transistors 152 ist mit dem Drain D des Transistors 34 verbunden, und der Drain D des Transistors 154 ist mit dem Drain D des Transistors 44 verbunden. Der Transistor 152 wird über eine Steuerleitung 160 vom $\mu$C 26 gesteuert. Ebenso wird der Transistor 154 über eine Steuerleitung 162 vom $\mu$C 26 gesteuert. (Die Ansteuerung der oberen Transistoren 152, 154 erfolgt gewöhnlich über zwischengeschaltete Verstärker, die in dieser Prinzipdarstellung nicht dargestellt sind.)

Im Betrieb fließt ein Strom vom Anschluss 62 über den Transistor 152, den Wicklungsstrang 30' und den Transistor 44 nach Masse 56, und nach einer Drehung des Rotors 22 um weniger als 180° el. wird kommutiert auf einen Strom vom Anschluss 62 über den Transistor 154, den Wicklungsstrang 30', den Transistor 34, und nach Masse 56.

Zur Messung der induzierten Spannung für die Ermittlung der Drehrichtung werden beide oberen Transistoren 152, 154 gesperrt, so dass dann zunächst ein Kreisstrom i* durch den Wicklungsstrang 30' und die beiden unteren Transistoren 34, 44 bzw. die Freilaufdioden 38, 48 fließt.

Hat der Kreisstrom i* den Wert Null erreicht, so wird in der gleichen Weise, wie das bei den Fig. 3, 6 und 7 ausführlich beschrieben wurde, die induzierte Spannung und deren Verlauf gemessen, wodurch sich die Drehrichtung ergibt.

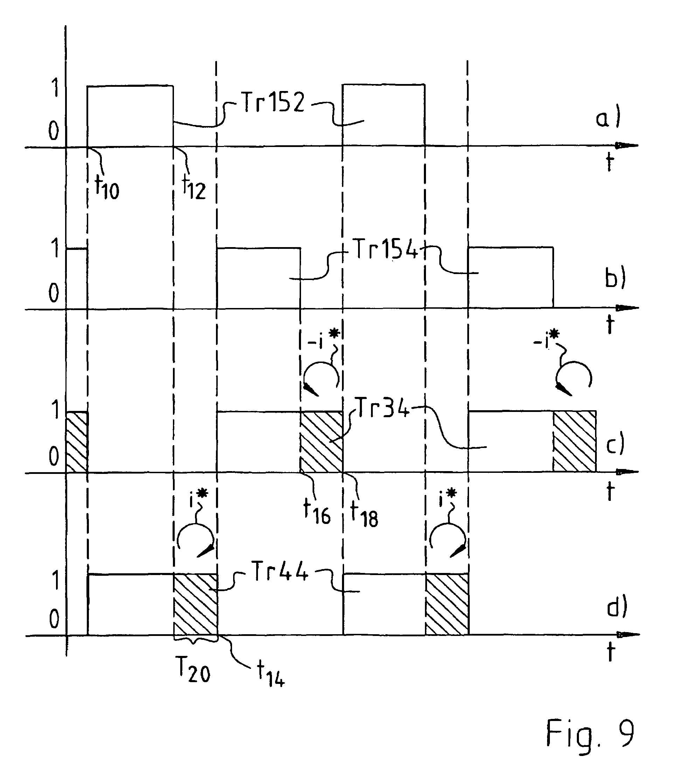

Für die Wirkungsweise von Fig. 8 wird auf **Fig. 9** Bezug genommen.

Zum Zeitpunkt t10 werden die beiden Transistoren 152 und 44 eingeschaltet, so dass ein Strom vom Anschluss 62 über den Transistor 152, den Strang 30' (von links nach rechts) und den Transistor 44 nach Masse fließt.

Zum Zeitpunkt t12 wird der Transistor 152 gesperrt, so dass die Energiezufuhr von außen unterbrochen wird. Der Transistor 44 bleibt leitend.

Da kein Strom mehr vom Anschluss 62 zum Motor fließen kann, wird der Strom im Strang 30' durch die Energie aufrecht erhalten, die in diesem Strang gespeichert ist, und es fließt innerhalb des Zeitraums T20 der Fig. 9 jetzt ein Kreisstrom i* (im Uhrzeigersinn) durch den Strang 30', durch den - weiterhin leitenden - Transistor 44, und zurück durch die Freilaufdiode 38 zum Strang 30'.

Dieser Kreisstrom i* treibt weiterhin den Rotor 22 an und fällt - innerhalb des Zeitbereichs T20 - rasch auf 0.

Wenn der Kreisstrom i* auf 0 gefallen ist, kann am Drain D des Transistors 44 die Spannung $u_{ind}$ (analog dem Signal 68 der Fig. 4b) gemessen werden, die vom Rotor 22 im Strang 30' induziert wird, und diese Spannung zeigt an, dass jetzt kommutiert werden kann. Der Verlauf ist insoweit identisch mit Fig. 4 zwischen den Zeiten t2 und t3.

Im Verlauf der Kommutierung wird zum Zeitpunkt t14 der Transistor 44 gesperrt, und es werden - nach einer kurzen Pause von z.B. 30 $\mu$s - die beiden Transistoren 154 und 34 eingeschaltet, so dass vom Anschluss 62 ein Strom über den Transistor 154, den Strang 30' (von rechts nach links) und den Transistor 34 nach Masse 56 fließt.

Zum Zeitpunkt t16 wird der Transistor 154 gesperrt, und anschließend fließt ein Kreisstrom -i* (entgegen dem Uhrzeigersinn) durch den (weiterhin leitenden) Transistor 34, die Freilaufdiode 48, und den Strang 30'. Dieser Strom -i* fällt rasch auf 0, wonach am Drain D des Transistors 34 (analog dem Signal 68 der Fig. 4) die induzierte Spannung gemessen werden kann, die vom Rotor 22 im Strang 30' induziert wird und die zum Zeitpunkt t18 eine neue Kommutierung bewirkt, wie in Fig. 9 dargestellt.

Auf diese Weise wird eine sensorlose Kommutierung in der gewünschten Drehrichtung erreicht, die auch bei schwierigen Verhältnissen eine Drehung des Motors 20 in der erforderlichen Drehrichtung sicherstellt.

Naturgemäß sind im Rahmen der vorliegenden Erfindung vielfache Abwandlungen und Modifikationen möglich.

**Patentansprüche**

1.  System mit einem elektronisch kommutierten einphasigen Motor (20), welcher einen Stator mit mindestens einem Wicklungsstrang (30, 32; 30') und einen permanentmagnetischen Rotor (22) aufweist, welch letzterer bei seiner Drehung in diesem Wicklungsstrang (30, 32) eine Spannung ($U_{ind}$) induziert, und mit einer elektronischen Recheneinrichtung (26), welche dazu ausgebildet ist, im Betrieb folgende Schritte repetitiv auszuführen:

    a) Die induzierte Spannung ($U_{ind}$) in einem stromlosen Wicklungsstrang (30, 32) wird während eines vorgegebenen Abschnitts (72) der induzierten Spannung abgetastet, um eine Mehrzahl von analogen Spannungswerten zu erhalten;

b) Die analogen Spannungswerte werden digitalisiert, um eine Mehrzahl von digitalisierten Spannungswerten zu erhalten;

c) Die Differenz zwischen einem aktuellen digitalisierten Spannungswert (neuer Wert) und einem diesem aktuellen Wert vorhergehenden digitalisierten Spannungswert (alter Wert) wird gebildet;

d) Das Vorzeichen der Differenz wird ermittelt;

e) Die Zahl X der Spannungswerte mit positiver Differenz wird ermittelt;

f) Die Zahl Y der Spannungswerte mit negativer Differenz wird ermittelt;

g) Abhängig vom Verhältnis zwischen diesen beiden Zahlen X und Y wird die Drehrichtung (DIR) des Rotors (22) ermittelt.

2. System nach Anspruch 1, bei welchem die Zahl Z der Vergleiche ermittelt wird, bei denen Identität zwischen dem aktuellen digitalisierten Wert (neuer Wert) und dem zum Vergleich herangezogenen vorhergehenden digitalisierten Wert (alter Wert) festgestellt wird,

und diese Zahl ins Verhältnis gesetzt wird zur Summe X + Y der Vergleiche, bei denen ein Unterschied zwischen dem aktuellen digitalisierten Wert (neuer Wert) und dem vorhergehenden digitalisierten Wert (alter Wert) festgestellt wird.

3. System nach Anspruch 1 oder 2, bei welchem im Betrieb Zeitdauern (T1, T3) für zwei aufeinander folgende Halbwellen (70, 72) der im stromlosen Wicklungsstrang induzierten Spannung (uind) gemessen und miteinander verglichen werden, um bei einer Abweichung dieser Zeitdauern, die einen vorgegebenen Grenzwert überschreitet, ein entsprechendes Signal zu erzeugen.

## Claims

1. System with an electronically commutated one-phase motor (20), having a stator with at least one winding phase (30, 32; 30') and a permanent magnetic rotor (22), the latter, as it rotates in this winding phase (30, 32), inducing a voltage ($u_{ind}$), and with an electronic computing device (26), which is in a form to execute the following steps repetitively in operation:

a) the induced voltage ($u_{ind}$) in a currentless winding phase (30, 32) is scanned during a predetermined section (72) of the induced voltage, to obtain multiple analogue voltage values;

b) the analogue voltage values are digitised, to obtain multiple digitised voltage values;

c) the difference between a present digitised voltage value (new value) and a digitised voltage value (old value) which preceded this present value is formed;

d) the sign of the difference is determined;

e) the number X of voltage values with positive difference is determined;

f) the number Y of voltage values with negative difference is determined;

g) depending on the ratio between these two numbers X and Y, the direction of rotation (DIR) of the rotor (22) is determined.

2. System according to Claim 1, wherein the number Z of comparisons which establish identity between the present digitised value (new value) and the preceding digitised value (old value) used for comparison is determined,

and this number is compared with the sum X + Y of the comparisons in which a difference between the present digitised value (new value) and the preceding digitised value (old value) is established.

3. System according to Claim 1 or 2, wherein in operation time durations (T1, T3) for two successive half-waves (70, 72) of the voltage (uind) induced in the currentless winding phase are measured and compared with each other, to generate a corresponding signal in the case of a difference of these time durations exceeding a predetermined limit value.

## Revendications

1. Système avec un moteur monophasé à commutation électronique (20) qui présente un stator avec au moins un enroulement de phase (30, 32 ; 30') et un rotor à aimant permanent (22), lequel dernier induit une tension ($u_{ind}$) dans cet enroulement de phase (30, 32) lors de sa rotation, et avec un dispositif électronique de calcul (26) qui est conçu pour exécuter les étapes suivantes de façon répétitive en fonctionnement :

a) la tension ($u_{ind}$) induite dans un enroulement de phase (30, 32) sans courant est échantillonnée pendant une partie (72) prédéfinie de la tension induite pour obtenir une pluralité de valeurs de tension analogiques ;

b) les valeurs de tension analogiques sont numérisées pour obtenir une pluralité de valeurs de tension numériques ;

c) la différence entre une valeur de tension numérisée actuelle (nouvelle valeur) et une valeur de tension numérisée qui précède cette valeur actuelle (ancienne valeur) est formée ;

d) le signe de la différence est déterminé ;

e) le nombre X de valeurs de tension avec une différence positive est déterminé ;

f) le nombre Y de valeurs de tension avec une différence négative est déterminé ;

g) le sens de rotation (DIR) du rotor (22) est déterminé en fonction du rapport entre ces deux nombres X et Y.

2. Système selon la revendication 1, dans lequel le nombre Z des comparaisons lors desquelles une identité entre la valeur numérisée actuelle (nouvelle valeur) et la valeur numérisée précédente utilisée pour la comparaison (ancienne valeur) est constatée,

et ce nombre est mis en rapport avec la somme X + Y des comparaisons lors desquelles une différence entre la valeur numérisée actuelle (nouvelle valeur) et la valeur numérisée précédente (ancienne valeur) est constatée.

3. Système selon la revendication 1 ou 2, dans lequel des durées (T1, T3) de deux demi-ondes successives (70, 72) de la tension ($u_{ind}$) induite dans l'enroulement de phase sans courant sont mesurées et comparées entre elles en fonctionnement pour, dans le cas d'une différence entre ces durées qui dépasse une valeur limite prédéfinie, générer un signal correspondant.

Fig. 1

Fig. 2

Fig. 3

Fig. 4

Fig. 5

START — S100

X = Y = Z = 0 — S102

TIMER 80 = 0 — S103

TIMER 80 EIN — S104

S106 — Uind ? — Y

N

Speichere T1
Speichere T2 — S108

A/D-Wandler EIN — S110

A/D-Wandlung
gestoppt => Resultat
= neuer Wert — S112

S116
Neuer Wert >
alter Wert? — Y — X : = X + a

S114 — N

S120
Neuer Wert <
alter Wert? — Y — Y : = Y + a

S118 — N

S124
Neuer Wert =
alter Wert? — Y — Z : = Z + a

S122

S128
Neuer Wert := alter
Wert

S126 — Uind ? — Y / N — Fig. 7

Fig. 6

Fig. 7

Fig. 8

Fig. 9

**IN DER BESCHREIBUNG AUFGEFÜHRTE DOKUMENTE**

**In der Beschreibung aufgeführte Patentdokumente**

- EP 1596495 A2
- WO 2006092265 A1
- JP 7222477 A
- US 3569753 A